(19)

Europäisches
Patentamt
European
Patent Office
Office européen
des brevets

(11) **EP 3 332 222 B1**

(12) **EUROPEAN PATENT SPECIFICATION**

(45) Date of publication and mention
of the grant of the patent:
**10.04.2019 Bulletin 2019/15**

(51) Int Cl.:
***G01D 4/00*** *(2006.01)*

(21) Application number: **16763950.9**

(86) International application number:
**PCT/IB2016/054633**

(22) Date of filing: **02.08.2016**

(87) International publication number:
**WO 2017/021873 (09.02.2017 Gazette 2017/06)**

(54) **METHOD AND DEVICE FOR MONITORING THE POWER CONSUMPTION OF A DOMESTIC ELECTRIC NETWORK**

VERFAHREN UND VORRICHTUNG ZUR ÜBERWACHUNG DES STROMVERBRAUCHS EINES HAUSHALTSSTROMNETZES

PROCÉDÉ ET DISPOSITIF PERMETTANT DE SURVEILLER LA CONSOMMATION ÉLECTRIQUE D'UN RÉSEAU ÉLECTRIQUE DOMESTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2015 IT UB20152843**

(43) Date of publication of application:
**13.06.2018 Bulletin 2018/24**

(73) Proprietor: **e-distribuzione S.p.A.**
**00198 Roma (IT)**

(72) Inventor: **MANDOLINI, Luigi**
**I-00198 Rome (IT)**

(74) Representative: **Carangelo, Pierluigi et al**
**Jacobacci & Partners S.p.A.**
**Via Tomacelli 146**
**00186 Roma (IT)**

(56) References cited:
**WO-A1-2009/013762      WO-A2-2004/095327**
**WO-A2-2011/050212      WO-A2-2011/058326**
**US-A1- 2012 243 416      US-B1- 6 311 105**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This description relates to the technical field of electricity distribution networks and refers in particular to a method and a device for monitoring the electrical power consumption of a domestic electric network.

An interface device is known that is connectible to a domestic electric network and able to communicate with the electronic energy meter of the domestic electric network by powerline communication to acquire power consumption data and display power consumption values for example on a display of the device itself or an external device such as a personal computer or smartphone.

The purpose of the above described type of interface device is to provide a user with data of the power consumed by the domestic electric network, the knowledge of which is particularly useful for user so that he can activate a large loads, such as a washing machine or iron, in such a way as to avoid the automatic disconnection of his domestic electric network from the distribution grid by the electronic energy meter when the power consumed exceeds a certain threshold value. A device of the type described above can also improve the user's awareness of his consumption, leading to energy savings.

The known type of interface device, existing both in a version with plug for connection to a common electrical socket and in a version mountable on a DIN rail in an electrical panel, comprises a communication module to communicate with the electronic counter using powerline communication and a control module adapted to control the communication module so as to poll the electronic energy meter at a predetermined fixed frequency to acquire power values.

The interface device comprises a USB port for connection to a personal computer, on which a program is installed that processes the acquired values to calculate power consumption values and that displays the power consumption values.

The frequency of polling of the electronic energy meter by the interface device cannot be too high because the powerline communication band of a home network is typically limited. Consequently, the power consumption data provided through the interface device may not be updated with sufficient speed. In other words, in case of sudden actuation of large loads, the interface device would not be able to inform the user in time to prevent the disconnection of the domestic network. The same problem could occur if the electronic energy meter and the interface device communicate with each other on a communication channel other than powerline communication, for example, if such a channel were shared channel and/or a channel with band limitation requirements. Moreover, in other cases also, whether or not independently of the need to reduce the use of a shared communications channel, there may be the need to contain or, in general, optimise the number of polls of the electronic energy meter, for example to optimise the computing/communication resources of the electronic energy meter.

WO2009/013762 describes a controller that reads the instantaneous parameters of a meter at regular intervals and analyses the data to identify abnormal conditions. Once an abnormal condition is identified, the controller searches for some time more for the existence of the anomaly and when a fixed time has elapsed sends a text message to the base station with the instantaneous parameters. WO2011/050212 describes a power node for energy management. Both the aforementioned documents describe solutions with a fixed polling frequency that, as such, must be selected from a compromise between the available bandwidth resources and the required accuracy.

The purpose of the present invention is to provide a method for monitoring, in real time, the electrical power consumed by the domestic electric network that overcomes, or at least reduces, the drawbacks described above with reference to the prior art interface device.

According to the present invention a method and a device are provided for monitoring the electric power consumption of a domestic electric network according to the annexed claims.

According to its more general embodiment, the method for monitoring the electrical power consumed by a domestic electric network comprising an electronic energy meter connected to an electrical power distribution grid, comprises the steps of:

- periodically polling, according to a first polling period, the electronic energy meter on a communication channel by means of a device, in order to receive, at every polling instant, information comprising at least one parameter related to a power consumption measurement, such as, for example, the value of active power or voltage and current values, carried out by the electronic energy meter;
- calculating on-board the device an estimate of said power consumption measurement or obtaining said power consumption measurement on-board the device;
- comparing said estimate or measurement of power consumption with at least a first threshold value;
- increasing the polling frequency if said power estimate or measurement is higher than, or equal to, said first threshold value.

According to its more general embodiment, the device is operatively connectable to an electronic energy meter to monitor the electric power consumed by a domestic electric network comprising said electronic energy meter. The device comprises a communication interface for communication with the electronic energy meter on a communication channel. The device comprises a processing and control unit operatively connected to the communication interface. The device is configured and programmed to poll the electronic energy meter on said communication channel in order to receive at each polling instant information comprising at least one parameter related to a power consumption measurement performed by the electronic energy meter.

The processing and control unit is configured for:

- calculating on-board the device an estimate of said power consumption measurement or obtaining said power consumption measurement on-board the device;
- comparing said estimate or said power consumption measurement with at least a first threshold value;
- increasing said polling frequency if said power estimate or measurement is higher than, or equal to, said threshold value.

The method and the device described above on a general level will be described below in greater detail with reference to the accompanying drawings, which illustrate a non-limiting implementation example, in which:

- Figure 1 schematically illustrates an electric network and an example of a device connected to said domestic electric network for monitoring the electric power consumed by said domestic electric network;
- Figure 2 illustrates an example of division into power bands that is adopted in a possible embodiment of the method of this invention to monitor the electric power consumption of the domestic electric network; and
- Figure 3 illustrates an example of division into power bands and sub-bands that is adopted in a possible embodiment of the method of this invention.

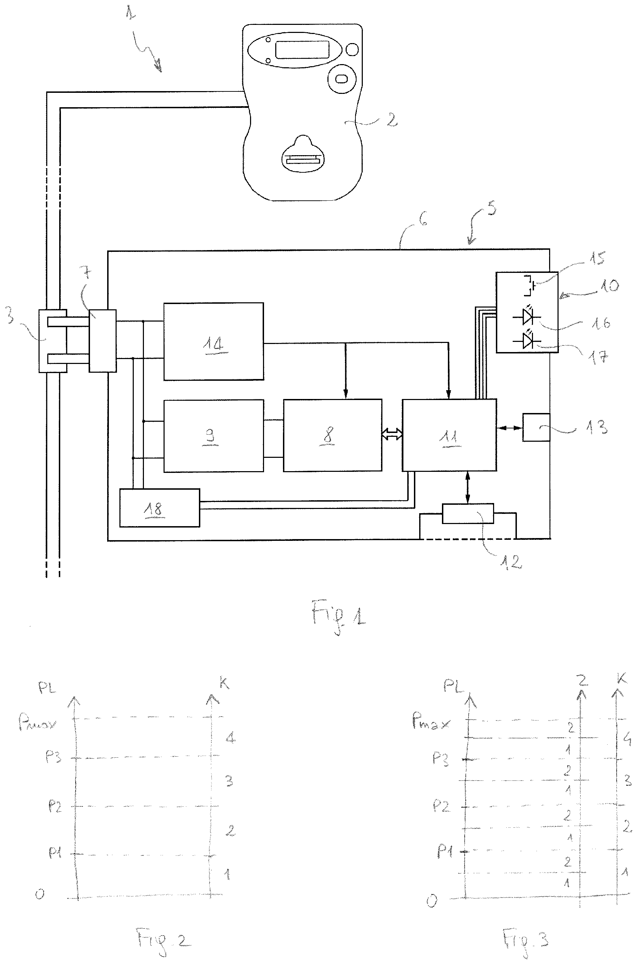

In Figure 1, reference number 1 indicates a domestic electric network, which comprises an electronic energy meter 2 connected to the electrical distribution grid and at least one power outlet 3, for example bipolar or tripolar. To the electric network and in particular to the power outlet 3 is preferably connected, i.e., electrically interconnected, a device 5 for monitoring the power consumption of the electric network 1. It is clear that the electric network 1 also comprises one or more loads not shown in the figures, for example based on the appliances connected to the electric network 1 and activated/deactivated by the user.

The device 5 comprises a box-like container 6, in the non-limiting example comprising a power plug 7 adapted to be coupled to the power outlet 3. According to a preferred and not limiting embodiment, the device 5 preferably comprises, housed in the box-like container 6: a communication interface 8 for the powerline communication with the electronic energy meter 2, a coupling circuit 9 for connecting the communication interface 8 to the power plug 7, a user interface 10, a processing and control unit 11 provided with an internal memory and interfaced with the communication interface 8 and with the user interface 10, two USB sockets 12 and 13 connected to the processing and control unit 11 and a power supply module 14 with its own input directly connected to the power plug 7 to electrically power the communication interface 8 and the processing and control unit 11.

In an alternative embodiment, the communication interface 8 could be a radio communication interface, for example a Bluetooth or Wi-Fi communication interface. In the rest of this description, for the sake of simplicity of description and without thereby introducing any limitation, reference will be made to the case in which the communication interface 8 is a powerline communication interface and that therefore the communication between the device 5 and electronic energy meter is a powerline communication on the domestic electric network, which is therefore also a communication channel between the device 5 and the electronic energy meter 2.

The user interface 10 preferably comprises a button 15, and two LEDs 16 and 17 controlled by the processing and control unit 11 to signal the operating status of the device 5, for example to signal that pairing has occurred between the device 5 and the electronic energy meter 2.

The USB socket 12 is for example provided to receive a USB type A connector and is used to connect the device 5 to an additional device, for example a wireless network interface device, for example Wi-Fi or Bluetooth. The USB socket 13 is for example provided to a USB mini-B type connector and is used for connection of the device 5 to a personal computer.

The processing and control unit is configured for:

- calculating on-board the device an estimate of said power consumption measurement or obtaining said power consumption measurement on-board the device;
- comparing said estimate or said power consumption measurement with at least a first threshold value;
- increasing said polling frequency (i.e., decreasing the polling period $T_q$) if said power estimate or measurement is higher than, or equal to, said threshold value.

According to an embodiment, the processing and control unit 11 is also configured for:

- comparing said power consumption estimate or measurement with at least a second threshold value;
- decreasing said polling frequency (i.e., increasing the polling period Tq) if said power estimate or measurement is lower than, or equal to, said second threshold value.

In this way, the polling frequency can be advantageously increased if power consumption increases and decreased if instead power consumption decreases. By providing a plurality of thresholds, it is possible to establish a plurality of estimated or measured power consumption reference bands and associate a respective polling frequency to each band.

The power measurement can be provided directly by the electronic energy meter, or calculated on board of the device 5 starting from at least the aforesaid parameter provided by the electronic energy meter following polling by the device 5, or it can be estimated by the device 5. In this latter case, the device 5 can, for example, as will be described below, calculate power estimates between two successive pollings of the electronic meter 2 and perform a faster adjustment of the polling frequency by using said estimates. The examples that will be described below will refer to this latter case, it being understood that the teachings of this description are also extended to the previous two cases, i.e., the case in which a power consumption estimate is not made between two successive pollings and, therefore, a fine adjustment of the polling frequency is not made in a plurality of instants comprised between two successive pollings.

According to an advantageous embodiment, in order to obtain an estimate of the power consumption measurement between two successive pollings, and therefore both a fine adjustment of the polling frequency and a more frequent monitoring of the power consumption, the device 5 comprises a voltage measurement circuit 18, which has:

- an input connected to the electric network 1, for example through the power plug 7, for measuring the electrical voltage of the domestic electric network 1 in the point of the network (for example at the power outlet 3) to which the device 5 is connected;
- an output connected to the processing and control unit 11 to provide the measured voltage values to it.

The voltage measurement circuit 18 can be made in a manner in itself substantially known. According to a first embodiment, the voltage measurement circuit 18 includes a shunt resistor, which is connected in a known manner to the input of an analogue/digital converter of the processing and control unit 11. According to a second embodiment, the voltage measurement circuit 18 comprises an integrated circuit of known type based on a transistor element.

According to the invention, the processing and control unit 11 is programmed and configured to implement the following method for monitoring the electric power consumption of the domestic electric network 1.

The device 5 periodically polls the electronic energy meter 2 to receive at each polling instant information useful to obtain or calculate first voltage values and first current values. This information comprises at least one parameter related to a consumption measurement performed by the electronic energy meter 2. According to an embodiment, said at least one parameter comprises a power value, for example, active power, measured by the electronic energy meter 2. In this case the device 5 is such as to calculate or determine for each polling a respective first voltage value and a respective first current value starting from said measured power value. According to an alternative embodiment, said at least one parameter comprises a current value and a voltage value measured by the electronic energy meter 2, thus in this case the device 5 obtains the first current values and the first voltage values directly from electronic energy meter 2.

The polling period Tq with which the device 5 polls the electronic energy meter 2 has a value comprised between 1 minute and 60 minutes in such a way that the band (limited) of the powerline communication transmission channel does not hinder the communication between the device 5 and electronic energy meter 2.

The sampling through the voltage measurement circuit 18, takes place according to a fixed or variable sampling period Ts less than the polling period Tq and allows the device 5 to obtain second voltage values. It is clear that such second values are obtained from the device 5 in an autonomous way with respect to the electronic energy meter 2, i.e., without polling the electronic energy meter 2, but by sampling the network voltage directly. Advantageously, to simplify the implementation of the method, the voltage at the power plug 7 is sampled synchronously with the polling of the electronic energy meter 2 and with a sampling period Ts of a value equal to an integer sub-multiple of the polling period value Tq.

According to an embodiment, at the i-th polling instant the power value $Pce_i$ measured by the electronic energy meter 2 value is read, for example an active power value, or a first voltage value and a first current value.

Assuming that the difference between the detected voltage across the electronic energy meter 2 $Vce_i$, and that read by the voltage measurement circuit 18 $Vdev_i$ is negligible, then:

$$Vce_i = Vdev_i$$

Therefore it is assumed:

$$Ice_i = Pce_i/Vce_i$$

We define

$$\Delta Ice_i = Ice_i - Ice_{i-1}$$

where i and i-1 indicate two consecutive polling instants of the electronic energy meter 2.

According to an embodiment, in an initial step of the monitoring method, as soon as the value of $\Delta Ice_i$, which represents a current variation between two successive pollings of the electronic energy meter 2, exceeds a certain threshold value It0, the first current values $Ice_i$ and the first voltage values $Vce_i$ are used by the device 5 to obtain a resistance, indicated below by Req, which is indicative of the equivalent resistance seen by the electronic energy meter 2 towards the electrical power distribution grid. The threshold value It0 is, for example, between 2A-8A, extremes included.

More in detail, at each polling instant (i-th polling instant) in which the value $\Delta Ice$ exceeds the threshold value It0, the processing and control unit calculates an instantaneous resistance Reqi as the ratio between the absolute value of a variation between the last two voltage values and a variation between the last two current values provided directly or indirectly by the electronic energy meter 2, i.e.,

$$Req_i = |\Delta Vce_i|/|\Delta Ice_i|$$

where

$$\Delta Vce_i = Vce_i - Vce_{i-1}$$

$$\Delta Ice_i = Ice_i - Ice_{i-1}.$$

Preferably, the equivalent resistance Req is calculated as the sliding window arithmetic average of the instantaneous resistances Reqi as these are progressively calculated. The sliding window used for the calculation of the arithmetic average has an amplitude comprised, for example, between 100 and 400 samples.

The voltage and current values are directly provided by the electronic energy meter 2 in the case in which the meter 2 is such as to measure said values and provide them in output following the pollings performed by the device 5. In this case, the device 5 obtains on-board the first current values and first voltage values directly from the electronic energy meter 2.

The voltage and current values are indirectly provided by the electronic energy meter 2 in the case in which the meter 2 is not such as to measure said values and/or provide them in output following the pollings performed by the device 5 and in the case in which it is the device 5 that calculates such values starting from information provided by the electronic energy meter 2. In this case, the device 5 is such as to calculate on board for each polling a respective first voltage value and a respective first current value starting from at least one parameter related to a consumption measurement made by the electronic energy meter 2. As already explained, according to an embodiment, said at least one parameter comprises a measured power value, for example, active power.

The intermediate data for the calculation of the sliding window arithmetic average are preferably stored in the memory of the processing and control unit 11.

For each sampling instant of the network voltage by the voltage measurement circuit 18 (j-th sampling instant), the voltage variation $\Delta Vdev_{ji}$ is calculated as the difference between the voltage value read at that sampling instant (j-th polling instant) and the voltage value read at time of the last polling of the electronic energy meter 2 (i-th polling instant), and a current variation $\Delta Idev_{ji}$ as the ratio between said voltage variation $\Delta Vdev_{ji}$ and the equivalent resistance Req, i.e.:

$$\Delta Vdev_{ji} = Vdev_j - Vdev_i$$

$$\Delta Idev_{ji} = - \Delta Vdev_{ji}/Req,$$

where the j-th sampling instant is comprised between the i-th polling instant and the i+1-th polling instant.

An estimated value of power consumed or absorbed by the domestic electric network 1 between two consecutive pollings, i.e., at the j-th sampling instant between the i-th polling instant and the i+1-th polling instant, is obtained with the following formula:

$$PL_{ji} = (Vce_i + \Delta Vdev_{ji}) \cdot (Ice_i + \Delta Idev_{ji}),$$

where $Vce_i$ and $Ice_i$ are first voltage and current values, i.e., the values obtained or calculated by the device 5 thanks to the polling of the electronic energy meter 2 at the i-th instant. In reality, the voltage variations $\Delta Vdev_{ji}$ also comprise random components that are not due to the connection or disconnection of a load in the domestic electric network and are, for example, due to the switching on or off of a load upstream of the electronic energy counter 2. These random components introduce some error in the calculation of the estimated power consumption value $PL_{ji}$, this error, however, being cancelled at each sampling carried out at the polling instants of the electrical energy meter 2. In fact, at the polling instants, the voltage variations $\Delta Vdev_{ji}$, and consequently the current variations $\Delta Idev_{ji}$, are null by definition.

According to an advantageous embodiment, to reduce the noise contribution between two successive pollings of the electronic energy meter 2, a moving average $<PL_{ji}>$ is performed on a given average time interval Tav of the estimated power consumption values $PL_{ji}$. For example, Tav is comprised in the range of 10-30 seconds, extremes included.

For example, the estimated power consumption values $PL_{ji}$ or the averages $<PL_{ji}>$, calculated at each sampling step according to the period Ts are made available to the USB sockets 12 and 13 so that they can be acquired and processed by an appropriate program installed on a personal computer in order to display the power consumption data and/or generate audio and/or visual alarms in relation to such data. Henceforth, for simplicity of description, reference will be made to the estimated power consumption values $PL_{ji}$ both in the case in which these values are not average and when these values are averaged to reduce noise, as described above.

According to an embodiment of this invention, the polling period Tq of the electronic energy meter 2 is regulated by the device 5 as a function of the estimated power consumption values $PL_{ji}$ so as to increase the accuracy of the estimate of the power consumed in the most critical situations. In particular, the polling frequency is progressively increased with as the estimated power consumption values $PL_{ji}$ increase, since the closer the power is to the threshold value that causes automatic disconnection, the more critical the situation becomes and, thus, the power is estimated with greater precision.

More in detail, in the above embodiment, the power range that can be supplied by electronic energy meter 2 is divided into several power bands by means of a certain number N of power threshold values, each of which is associated with a respective hysteresis interval. Therefore, the number of power bands is equal to N+1. The k-th power band in which said estimated power consumption values $PL_{ji}$ are found is identified by the device 5 on the basis of a comparison between the estimated power consumption $PL_{ji}$ and the N threshold values. Preferably, this comparison is performed by the device 5 at each sampling step to allow a quick adjustment of the polling period Tq.

Figure 2 illustrates an example with 3 threshold values (N=3), indicated with P1, P2 and P3, which divide the power range into four power bands.

According to a possible embodiment, to each power band is associated an initial polling time $tq0_k$ (or "first polling time"), where k is the band index comprised between 1 and N+1, which consists of the time that must elapse from when the estimated power consumption value $PL_{ji}$ enters the k-th band as a result of an increase in power (transition from the k-1-th band to the k-th band) before performing the first polling of the electronic energy meter 2 in the k-th band. Preferably, the above logic is not applied in the case of a decrease of the estimated power consumption towards a lower band, since the decrease in the estimated power consumption is considered a moving away from the critical situation. According to an advantageous embodiment, the value of the first polling times $tq0_k$ decreases passing from the lowest power band (k=1) to the highest power band (k=N+1):

$$Tq0_{k+1} < Tq0_k.$$

Moreover, to each power band is associated a respective value $Tq_k$ of the polling period in such a way that when the estimated power consumption value $PL_{ji}$ enters the k-th power band, the polling period Tq is adjusted to the related value $Tq_k$, i.e., $Tq=Tq_k$. The values $Tq_k$ assigned to the polling period Tq upon entering a power band decrease, passing from the lowest power band (k=1) to the highest power band (k=N+1) :

$$Tq_{k+1} < Tq_k.$$

The values $Tq_k$ are for example comprised between a minimum value of 10 minutes for the highest power band up to a maximum of 60 minutes for the lowest power band.

As long as the estimated power consumption values $PL_{ji}$ remain in the k-th band, the electronic energy counter 2 is polled according to the respective polling period $Tq=Tq_k$.

According to a further embodiment of this invention, each of the N power bands below the highest threshold value (N-th) is divided into two related sub-bands of equal amplitude by a related further threshold value. Therefore, the number of power sub-bands is equal to 2N.

Figure 3 illustrates the sub-bands in the same example of bands (N = 3) of Figure 2.

To each of the sub-bands is associated a respective value $Tq_{kz}$ of the polling period, where k is the band index comprised between 1 and N and, within the k-th band, z is the sub-band index, which is 1 or 2. The values $Tq_{kz}$ for k comprised between 1 and N of the embodiment of Figure 3 replace the values $Tq_k$ of the same index k of the embodiment of Figure 2. The values $Tq_{kz}$ of the polling period decrease passing from the lower sub-band of the first band (k=1) to the upper sub-band of the penultimate band (z=N). The value $Tq_{N+1}$ associated to the last band is smaller than the values of $Tq_{kz}$ of all the sub-bands (k comprised between 1 and N) .

The values $Tq_{kz}$ are for example comprised between a minimum value of 10 minutes for the highest power band up to a maximum of 60 minutes for the lowest power band.

The presence of the sub-bands allows further optimising the frequency of polling the electronic energy meter in order to increase it only in the most critical power situations that could lead to a disconnection of the electronic energy meter 2. To two sub-bands belonging to the same band k, is preferably associated the same first polling time $T_{0k}$.

There are further possible embodiments, complementary to those already described, that allow further optimising the polling of the electronic meter, which will be described below.

According to a first further embodiment, the polling of the electronic energy meter 2, occurs in correspondence of a power variation greater than a determined fixed value. More in detail, for example, the average value of the average values $<PL_{ji}>$ is calculated using a number of Lv of previous average values $<PL_{ji}>$. This average value is indicated with $<<PL_{ji}>>$ and stored for later processing. Then, the difference $\Delta<PL_{ji}>$ between $<PL_{ji}>$ And $<<PL_{ji}>>$ is calculated.

$$\Delta<PL_{ji}> = <PL_{ji}> - <<PL_{ji}>>.$$

Two counting variables, m and d are defined and initially set to 0
m, d = 0.

If the difference $\Delta<PL_{ji}>$ is greater than the pre-set power value PV (e.g., 1000 W) or less than the pre-set power value PN (e.g., -500 W), the counting variables m and d are set to one and zero, respectively.
If $\Delta<PL_{ji}>$ > PV or $\Delta<PL_{ji}>$ < PN then
m = 1; d = 0

At each sampling instant q > j, the difference $\Delta<PL_{ji}>$ between $<PL_{ji}>$ And $<<PL_{ji}>>$ is calculated.

$$\Delta<PL_{qi}> = <PL_{qi}> - <<PL_{ji}>>.$$

If $\Delta<PL_{qi}>$ is greater than the pre-set power value PV or less than the pre-set power value PN, the counting variables m and d are set to zero. If neither of these conditions has occurred, d is increased by one. Therefore:
If $\Delta<PL_{qi}>$ > PV or $\Delta<PL_{qi}>$ < PN then
d = 0
else d = d+1

If the value of d exceeds a pre-set value DMAX, m is set to zero, i.e., it is reset. Otherwise, m is increased by one.
If d > DMAX Then
m = 0
else m = m+1

If m assumes the pre-set value MMAX, m is set to zero, d is set to zero, and at the next processing instant the electronic energy meter 2 is polled. Therefore:
If m = MMAX then
m = 0; d = 0
polling meter at instant j+1.

According to a second further embodiment, complementary to the first further embodiment described above, the polling of the electronic energy meter 2, takes place in correspondence to the detection of a difference between the local maximum $<PL>_{max}$ and the local minimum $<PL>_{min}$ of the power curve $<PL_{ji}>$ greater than a pre-set amount. More in detail, the average power value $<PL_{ji}>$ and the value $<PL_{j-1, i}>$ related to the preceding sampling instant are compared.

If $<PL_{ji}>$ is greater than $<PL_{j-1, i}>$, the trend is increasing, otherwise it is decreasing.

If the trend detected at instant j differs from that detected at instant j-1, the difference $\Delta PL$ is calculated

$$\Delta PL = <PL>_{max} - <PL>_{min}.$$

If this difference is greater than a pre-set value LTMAX, at the next processing instant the electronic energy meter 2 is polled. If the trend detected is increasing, the value $<PL_{ji}>$ is stored in the variable $<PL>_{max}$. If the trend detected is decreasing, the value $<PL_{ji}>$ is stored in the variable $<PL>_{min}$.

According to a third further embodiment of this invention, combinable with the first further embodiment of embodiment described above and/or with the second embodiment described above, to each power band is associated a minimum polling time $TM0_k$, where k is the band index comprised between 1 and N+1. This minimum polling time indicates the minimum time interval that must elapse between two successive pollings of the electronic energy meter 2. The value of the minimum polling times $tq0_k$ decreases passing from the lowest power band (k=1) to the highest power band (k=N+1):

$$Tm0_{k+1} < Tm0_k.$$

Although the invention described above makes particular reference to very specific embodiments, it should not be considered limited to these examples, since its scope includes all those variations, modifications or simplifications that would be evident to an expert in the field, such as for example implementation in a device mountable on a DIN rail and connectible at a point of the electric network immediately downstream of the electronic energy meter 2 by means of appropriate connection terminals. decreases passing from the lowest power band (k=1) to the highest power band (k=N+1):

$$Tm0_{k+1} < Tm0_k.$$

Although the invention described above makes particular reference to very specific embodiments, it should not be considered limited to these examples, since its scope includes all those variations, modifications or simplifications that would be evident to an expert in the field, such as for example implementation in a device mountable on a DIN rail and connectible at a point of the electric network immediately downstream of the electronic energy meter 2 by means of appropriate connection terminals.

**Claims**

1. Method for monitoring the electrical power consumed by a domestic electric network comprising an electronic energy meter (2) connected to an electrical power distribution grid, the method comprising the steps of:

   - periodically polling, according to a polling period Tq, the electronic energy meter (2) on a communication channel by means of a device (5), in order to receive, at every polling instant, information comprising at least one parameter related to a power consumption measurement carried out by the electronic energy meter;
   - calculating on-board the device an estimate of said power consumption measurement or obtaining said power consumption measurement on-board the device;
   - comparing said estimate or said power consumption measurement with at least a first threshold value;
   - increasing the polling frequency if said power estimate or measurement is higher than, or equal to, said threshold value.

2. Method according to claim 1, wherein:

- said step of calculating or obtaining is such as to calculate or obtain on-board the device (5) first voltage values (Vcei) and corresponding first current values ($Ice_i$) ;
- the device comprises electrical connection elements (7) connected to the domestic electric network (1) and a voltage measurement circuit connected to said electrical connection elements;

and wherein the method comprises the steps of:

- sampling, by means of said voltage measurement circuit (18) the voltage of the domestic electric network (1) according to a sampling period Ts less than said polling period Tq to obtain second voltage values ($Vdev_j$, $Vdev_i$); and
- determining on-board the device (5) a plurality of estimated values of power consumed ($PL_{ji}$), between two consecutive polling instants of the electronic meter, as a function of said first voltage values ($Vce_i$), of said first current values ($Ice_i$) and of said second voltage values (Vdevj) ;

and wherein said comparing step is such as to compare said plurality of estimation values with said at least one first threshold value.

3. Method according to claim 2 wherein the determining step comprises the steps of:

- calculating an equivalent resistance (Req), which is indicative of the equivalent resistance seen by the electronic meter (2) towards the electricity distribution grid, as a function of a series of said first voltage values (Vcei) and a corresponding series of said first current values (Icei); and
- determining estimated values of power consumed ($PL_{ji}$) as a function of said first voltage values ($Vce_i$), of said first current values (Icei), of said equivalent resistance (Req) and of said second voltage values ($Vdev_j$, $Vdev_i$).

4. Method according to claim 3, wherein said equivalent resistance (Req) is calculated as the sliding window arithmetic average of a plurality if instantaneous resistances ($Req_i$), each of which is calculated as the ratio between a first voltage variation (ΔVcei) and a corresponding first current variation (ΔIcei), said first voltage variation (ΔVcei) being a difference between two first voltage values acquired/calculated in two consecutive polling steps and said first current variation ($\Delta Ice_i$) being a difference between two current values obtained/calculated in the same two polling steps.

5. Method according to claim 3 or 4, wherein the determining step comprises the steps of:

- determining estimated values of power consumed ($PL_{ji}$) between two consecutive polling steps (i, i+1) as a function of one of said first voltage values (Vcei) and one of said first current values ($Ice_i$) acquired at the first of said two consecutive polling steps and as a function of the second voltage values ($Vdev_j$) sampled between the two consecutive polling steps.

6. Method according to claim 3 or 4, wherein the determining step comprises the steps of:

- for each sampling step (j) between two consecutive polling steps (i, i+1), calculating a related second voltage variation ($\Delta Vdev_{jj}$) between one of said second voltage values ($Vdev_j$), relating to this sampling step, and another of said second voltage values ($Vdev_i$), sampled at the first of the two consecutive polling steps; and
- for each sampling step (j) between two consecutive polling steps (i, i+1), calculating a related estimated value of power consumed (PLji) as a function of one of said first voltage values (Vcei) and of one of said first current values (Icei) obtained or calculated at the first of said two consecutive polling steps and as a function of said second voltage values ($\Delta Vdev_{ji}$) of said equivalent resistance (Req).

7. Method according to claim 6, wherein said estimation value of power consumed is calculated according to the formula:

$$PL_{ji} = (Vce_i + \Delta Vdev_{ji}) \cdot (Ice_i + \Delta Idev_{ji}),$$

where $PL_{ji}$ is the estimated value of power consumed at the generic sampling step j, $Vce_i$ is said one of said first voltage values obtained/calculated at the first of said two consecutive polling steps, $\Delta Vdev_{ji}$ is said second voltage variation, $Ice_i$ is said one of said first current values obtained/calculated at the first of said two consecutive polling steps and $\Delta Idevji$ is a second current variation calculated as the ratio between said second voltage variation and said equivalent resistance.

8. Method according to any one of claims 2 to 7, comprising a step of varying the polling period Tq as a function of said estimation values of power consumed ($PL_{ji}$) .

9. Method according to claim 8, wherein said varying step comprises an operation of progressively reducing said polling period Tq with the increase of said estimated values of power consumed ($PL_{ji}$).

10. Method according to any one of claims 2 to 9, and comprising the steps of:

   - subdividing the range of power deliverable by the electronic energy meter (2) into a plurality of power bands by means of a corresponding plurality of power threshold values;
   - associating to the power bands respective polling period values, which decrease passing from the lowest power band to the highest power band;
   - identifying the power band in which said estimated values of power consumed ($PL_{ji}$) are found on the basis of a comparison between said estimated values of power consumed and said power threshold values; and
   - adjusting the polling period to the polling period value associated with the power band identified.

11. Method according to any one of claims 2 to 10, comprising:

   - subdividing the range of power deliverable by said electronic energy meter (2) into a plurality of power bands by means of a corresponding plurality of power threshold values;
   - identifying the power band in which said estimated values of power consumed ($PL_{ji}$) are found on the basis of a comparison between said estimated values of power consumed and said power threshold values; and
   - associating to the respective power bands initial polling times ($tq0_k$), each of which consists of the time that must elapse from when the estimated values of power consumed are entered in the related power band following an increase of power before performing a first polling of said electronic meter (2) in such power band.

12. Method according to any of the preceding claims, wherein said communication channel is said domestic electric network and wherein said electronic energy meter (2) and said device communicate with each other over between them on said electric network by means of powerline communication.

13. Device (5) operatively connectable to an electronic energy meter to estimate the electrical power consumed by a domestic electric network comprising said electronic energy meter (2), comprising a communication interface (8) for communication with the electronic energy meter (2) on a communication channel and a processing and control unit (11) operatively connected to the communication interface (8), the device (5) being configured and programmed to poll the electronic energy meter (2) on said communication channel in order to receive at each polling instant information comprising at least one parameter related to a power consumption measurement carried out by the electronic energy meter (2) and being **characterised in that** the processing and control unit is configured for:

   - calculating on board the device an estimate of said power consumption measurement or obtaining said power consumption measurement on-board the device;
   - comparing said estimate or said power consumption measurement with at least a first threshold value;
   - increasing said polling frequency if said power estimate or measurement is higher than, or equal to, said threshold value.

14. Device (5) according to claim 13, wherein:

   - The processing and control unit (11) is configured for calculating a plurality of estimated values of power consumed between two subsequent pollings;
   - the device (5) comprises connection elements to the domestic electric network and a voltage measurement circuit (18) connected to said connection elements for measuring the voltage of the domestic electric network (1) at the connection point with said electrical connection elements (7) and outputting a plurality of voltage values between two subsequent pollings of the electronic energy meter (2) in order to calculate said plurality of estimated values.

**15.** Device (5) according to claim 13, wherein said communication interface (8) is a powerline communication interface.

**16.** Device (5) according to any of claims 13 to 15, wherein the processing and control unit (11) is configured for implementing a method according to any of claims 1 to 12.

**Patentansprüche**

**1.** Verfahren zum Überwachen der elektrischen Leistung, die durch ein Haushaltsstromnetz verbraucht wird, das einen mit einem Elektrische-Leistung-Verteilungsnetz verbundenen elektronischen Energiezähler (2) aufweist, wobei das Verfahren folgende Schritte aufweist:

- periodisches Abfragen, gemäß einer Abfrageperiode Tq, des elektronischen Energiezählers (2) über einen Kommunikationskanal mittels einer Vorrichtung (5), um zu jedem Abfragezeitpunkt Informationen zu empfangen, die zumindest einen Parameter aufweisen, der sich auf eine durch den elektronischen Energiezähler durchgeführte Leistungsverbrauchsmessung bezieht;
- Berechnen, auf Bordseite der Vorrichtung, einer Schätzung der Leistungsverbrauchsmessung oder Erhalten, auf Bordseite der Vorrichtung, der Leistungsverbrauchsmessung;
- Vergleichen der Schätzung oder der Leistungsverbrauchsmessung mit zumindest einem ersten Schwellenwert;
- Erhöhen der Abfragefrequenz, falls die Leistungsschätzung oder -messung höher als oder gleich dem Schwellenwert ist.

**2.** Verfahren gemäß Anspruch 1, bei dem:

- der Schritt des Berechnens oder Erhaltens derart erfolgt, dass auf Bordseite der Vorrichtung (5) erste Spannungswerte (Vcei) und entsprechende erste Stromwerte ($Ice_i$) berechnet oder erhalten werden;
- die Vorrichtung mit dem Haushaltsstromnetz (1) verbundene elektrische Verbindungselemente (7) und eine mit den elektrischen Verbindungselementen verbundene Spannungsmessschaltung aufweist;

und wobei das Verfahren folgende Schritte aufweist:

- Abtasten, mittels der Spannungsmessschaltung (18), der Spannung des Haushaltsstromnetzes (1) gemäß einer Abtastperiode Ts, die kleiner als die Abfrageperiode Tq ist, um zweite Spannungswerte ($Vdev_j$, $Vdev_i$) zu erhalten; und
- Bestimmen, auf Bordseite der Vorrichtung (5), einer Mehrzahl von geschätzten Werten der verbrauchten Leistung ($PL_{ji}$) zwischen zwei aufeinanderfolgenden Abfragezeitpunkten des elektronischen Zählers in Abhängigkeit von den ersten Spannungswerten ($Vce_i$), den ersten Stromwerten ($Ice_i$) und den zweiten Spannungswerten ($Vdev_j$);

und wobei der Vergleichsschritt derart erfolgt, dass die Mehrzahl von Schätzwerten mit dem zumindest einen ersten Schwellenwert verglichen wird.

**3.** Verfahren gemäß Anspruch 2, bei dem der Bestimmungsschritt folgende Schritte aufweist:

- Berechnen eines Ersatzwiderstands (Req), der den durch den elektronischen Zähler (2) festgestellten Ersatzwiderstand gegenüber dem Elektrizitätsverteilungsnetz anzeigt, in Abhängigkeit von einer Reihe der ersten Spannungswerte (Vcei) und einer entsprechenden Reihe der ersten Stromwerte ($Ice_i$) und
- Bestimmen von geschätzten Werten der verbrauchten Leistung ($PL_{ji}$) in Abhängigkeit von den ersten Spannungswerten ($Vce_i$), den ersten Stromwerten ($Ice_i$), dem Ersatzwiderstand (Req) und den zweiten Spannungswerten ($Vdev_j$, $Vdev_i$).

**4.** Verfahren gemäß Anspruch 3, wobei der Ersatzwiderstand (Req) als das Gleitfenster-arithmetisches-Mittel einer Mehrzahl von momentanen Widerständen ($Req_i$) berechnet wird, von denen jeder als das Verhältnis zwischen einer ersten Spannungsschwankung ($\Delta Vcei$) und einer entsprechenden ersten Stromschwankung ($\Delta Ice_i$) berechnet wird, wobei die erste Spannungsschwankung ($\Delta Vcei$) eine Differenz zwischen zwei ersten Spannungswerten ist, die in zwei aufeinanderfolgenden Abfrageschritten erfasst/berechnet werden, und die erste Stromschwankung ($\Delta Ice_i$) eine

Differenz zwischen zwei Stromwerten ist, die in denselben zwei Abfrageschritten erhalten/berechnet werden.

5. Verfahren gemäß Anspruch 3 oder 4, bei dem der Bestimmungsschritt folgenden Schritt aufweist:

    - Bestimmen von geschätzten Werten der verbrauchten Leistung ($PL_{ji}$) zwischen zwei aufeinanderfolgenden Abfrageschritten (i, i+1) in Abhängigkeit von einem der ersten Spannungswerte ($Vce_i$) und einem der ersten Stromwerte ($Ice_i$), die bei dem ersten der zwei aufeinanderfolgenden Abfrageschritte erfasst werden, und in Abhängigkeit von den zweiten Spannungswerten ($Vdev_j$), die zwischen den zwei aufeinanderfolgenden Abfrageschritten abgetastet werden.

6. Verfahren gemäß Anspruch 3 oder 4, bei dem Bestimmungsschritt folgende Schritte aufweist:

    - für jeden Abtastschritt (j) zwischen zwei aufeinanderfolgenden Abfrageschritten (i, i+1), Berechnen einer zugehörigen zweiten Spannungsschwankung ($\Delta Vdev_{jj}$) zwischen einem der zweiten Spannungswerte ($Vdev_j$), die sich auf diesen Abtastschritt beziehen, und einem anderen der zweiten Spannungswerte ($Vdev_i$), die bei dem ersten der zwei aufeinanderfolgenden Abfrageschritte abgetastet werden; und
    - für jeden Abtastschritt (j) zwischen zwei aufeinanderfolgenden Abfrageschritten (i, i+1), Berechnen eines zugehörigen geschätzten Wertes der verbrauchten Leistung ($PLji$) in Abhängigkeit von einem der ersten Spannungswerte ($Vce_i$) und einem der ersten Stromwerte ($Ice_i$), die bei dem ersten der zwei aufeinanderfolgenden Abfrageschritte erhalten oder berechnet werden, und in Abhängigkeit von den zweiten Spannungswerten ($\Delta Vdev_{ji}$) des Ersatzwiderstands ($Req$).

7. Verfahren gemäß Anspruch 6, bei dem der Schätzwert der verbrauchten Leistung gemäß folgender Formel berechnet wird:

$$PL_{ji} = (Vce_i + \Delta Vdev_{ji}) \cdot (Ice_i + \Delta Idev_{ji}) \, ,$$

wobei $PL_{ji}$ der geschätzte Wert der verbrauchten Leistung bei dem allgemeinen Abtastschritt j ist, $Vce_i$ der eine der ersten Spannungswerte ist, die bei dem ersten der zwei aufeinanderfolgenden Abfrageschritte erhalten/berechnet werden, $\Delta Vdev_{ji}$ die zweite Spannungsschwankung ist, $Ice_i$ der eine der ersten Stromwerte ist, die bei dem ersten der zwei aufeinanderfolgenden Abfrageschritte erhalten/berechnet werden, und $\Delta Idev_{ji}$ eine zweite Stromschwankung ist, die als das Verhältnis zwischen der zweiten Spannungsschwankung und dem Ersatzwiderstand berechnet wird.

8. Verfahren gemäß einem der Ansprüche 2 bis 7, das einen Schritt des Variierens der Abfrageperiode Tq in Abhängigkeit von den Schätzwerten der verbrauchten Leistung ($PL_{ji}$) aufweist.

9. Verfahren gemäß Anspruch 8, bei dem der Schritt des Variierens einen Vorgang des schrittweisen Reduzierens der Abfrageperiode Tq bei Zunahme der geschätzten Werte der verbrauchten Leistung ($PL_{ji}$) aufweist.

10. Verfahren gemäß einem der Ansprüche 2 bis 9 und das folgende Schritte aufweist:

    - Unterteilen des durch den elektronischen Energiezähler (2) lieferbaren Leistungsbereichs in eine Mehrzahl von Leistungsbändern mittels einer entsprechenden Mehrzahl von Leistungsschwellenwerten;
    - Zuordnen, zu den Leistungsbändern, von jeweiligen Abfrageperiodewerten, die im Verlauf von dem niedrigsten Leistungsband zu dem höchsten Leistungsband abnehmen;
    - Identifizieren des Leistungsbands, in dem die geschätzten Werte der verbrauchten Leistung ($PL_{ji}$) gefunden werden, auf Basis eines Vergleichs zwischen den geschätzten Werten der verbrauchten Leistung und den Leistungsschwellenwerten und
    - Einstellen der Abfrageperiode auf den Abfrageperiodewert, der dem identifizierten Leistungsband zugeordnet ist.

11. Verfahren gemäß einem der Ansprüche 2 bis 10, das folgende Schritte aufweist:

    - Unterteilen des durch den elektronischen Energiezähler (2) lieferbaren Leistungsbereichs in eine Mehrzahl von Leistungsbändern mittels einer entsprechenden Mehrzahl von Leistungsschwellenwerten;

- Identifizieren des Leistungsbands, in dem die geschätzten Werte der verbrauchten Leistung (PL$_{ji}$) gefunden werden, auf Basis eines Vergleichs zwischen den geschätzten Werten der verbrauchten Leistung und den Leistungsschwellenwerten und

- Zuordnen, zu den jeweiligen Leistungsbändern, von Anfangsabfragezeiten (tq0$_k$), von denen jede aus der Zeit besteht, die ab dann vergehen muss, wenn die geschätzten Werte der verbrauchten Leistung in das zugehörige Leistungsband eingegeben werden, folgend auf eine Zunahme der Leistung, bevor eine erste Abfrage des elektronischen Zählers (2) in einem derartigen Leistungsband durchgeführt wird.

12. Verfahren gemäß einem der vorhergehenden Ansprüche, bei dem der Kommunikationskanal das Haushaltsstromnetz ist und bei dem der elektronische Energiezähler (2) und die Vorrichtung miteinander über das elektrische Netz zwischen denselben mittels Netzleitungskommunikation kommunizieren.

13. Vorrichtung (5), die wirksam mit einem elektronischen Energiezähler verbunden werden kann, um die elektrische Leistung zu schätzen, die durch ein Haushaltstromnetz verbraucht wird, das den elektronischen Energiezähler (2) aufweist, wobei die Vorrichtung eine Kommunikationsschnittstelle (8) zur Kommunikation mit dem elektronischen Energiezähler (2) über einen Kommunikationskanal und eine Verarbeitungs- und Steuereinheit (11) aufweist, die wirksam mit der Kommunikationsschnittstelle (8) verbunden ist, wobei die Vorrichtung (5) dazu konfiguriert und programmiert ist, den elektronischen Energiezähler (2) über den Kommunikationskanal abzufragen, um zu jedem Abfragezeitpunkt Informationen zu empfangen, die zumindest einen Parameter aufweisen, der sich auf eine durch den elektronischen Energiezähler (2) durchgeführte Leistungsverbrauchsmessung bezieht, und **dadurch gekennzeichnet ist, dass** die Verarbeitungs- und Steuereinheit konfiguriert ist zum:

- Berechnen, auf Bordseite der Vorrichtung, einer Schätzung der Leistungsverbrauchsmessung oder Erhalten, auf Bordseite der Vorrichtung, der Leistungsverbrauchsmessung;
- Vergleichen der Schätzung oder der Leistungsverbrauchsmessung mit zumindest einem ersten Schwellenwert;
- Erhöhen der Abfragefrequenz, falls die Leistungsschätzung oder -messung höher als oder gleich dem Schwellenwert ist.

14. Vorrichtung (5) gemäß Anspruch 13, bei der:

- die Verarbeitungs- und Steuereinheit (11) zum Berechnen einer Mehrzahl von geschätzten Werten der verbrauchten Leistung zwischen zwei aufeinanderfolgenden Abfragen konfiguriert ist;
- die Vorrichtung (5) Verbindungselemente zu dem Haushaltsstromnetz und eine Spannungsmessschaltung (18) aufweist, die mit den Verbindungselementen verbunden ist, zum Messen der Spannung des Haushaltsstromnetzes (1) an dem Verbindungspunkt mit den elektrischen Verbindungselementen (7) und zum Ausgeben einer Mehrzahl von Spannungswerten zwischen zwei aufeinanderfolgenden Abfragen des elektronischen Energiezählers (2), um die Mehrzahl von geschätzten Werten zu berechnen.

15. Vorrichtung (5) gemäß Anspruch 13, bei der die Kommunikationsschnittstelle (8) eine Netzleitungskommunikationsschnittstelle ist.

16. Vorrichtung (5) gemäß einem der Ansprüche 13 bis 15, bei der die Verarbeitungs- und Steuereinheit (11) zum Implementieren eines Verfahrens gemäß einem der Ansprüche 1 bis 12 konfiguriert ist.

**Revendications**

1. Procédé de surveillance de la puissance électrique consommée par un réseau électrique domestique comprenant un compteur d'énergie électronique (2) connecté à un réseau de distribution d'énergie électrique, le procédé comprenant les étapes de :

- interrogation périodique, selon une période d'interrogation Tq, le compteur d'énergie électronique (2) sur un canal de communication au moyen d'un dispositif (5), afin de recevoir, à chaque instant d'interrogation, des informations comprenant au moins un paramètre lié à une mesure de consommation de puissance effectuée par le compteur d'énergie électronique ;
- calcul à bord du dispositif d'une estimation de ladite mesure de consommation de puissance ou obtention de ladite mesure de consommation de puissance à bord du dispositif ;
- comparaison de ladite estimation ou de ladite mesure de consommation de puissance avec au moins une première valeur seuil ;
- augmentation de la fréquence d'interrogation si ladite estimation ou mesure de la puissance est supérieure ou égale à ladite valeur seuil.

2. Procédé selon la revendication 1, dans lequel :

- ladite étape de calcul ou d'obtention est telle qu'elle permet de calculer ou d'obtenir à bord du dispositif (5) des premières valeurs de tension (Vcei) et des premières valeurs de courant correspondantes (Ice$_i$) ;
- le dispositif comprend des éléments de connexion électrique (7) connectés au réseau électrique domestique (1) et un circuit de mesure de la tension connecté auxdits éléments de connexion électrique ;

et dans lequel le procédé comprend les étapes de :

- échantillonnage, au moyen dudit circuit de mesure de la tension (18), de la tension du réseau électrique domestique (1) selon une période d'échantillonnage Ts inférieure à ladite période d'interrogation Tq pour obtenir des secondes valeurs de tension (Vdev$_j$, Vdev$_i$); et
- détermination à bord du dispositif (5) d'une pluralité de valeurs estimées de la puissance consommée (PL$_{ji}$), entre deux instants d'interrogation consécutifs du compteur électronique, en fonction desdites premières valeurs de tension (Vce$_i$), desdites premières valeurs de courant (Ice$_i$) et desdites secondes valeurs de tension (Vdev$_j$) ;

et dans lequel ladite étape de comparaison est telle qu'elle permet de comparer ladite pluralité de valeurs d'estimation avec ladite au moins une première valeur seuil.

3. Procédé selon la revendication 2 dans lequel l'étape de détermination comprend les étapes de :

- calcul d'une résistance équivalente (Req), qui est indicatrice de la résistance équivalente vue par le compteur électronique (2) vers le réseau de distribution d'électricité, en fonction d'une série desdites premières valeurs de tension (Vce$_i$) et d'une série correspondante desdites premières valeurs de courant (Ice$_i$) ; et
- détermination des valeurs estimées de la puissance consommée (PL$_{ji}$) en fonction desdites premières valeurs de tension (Vce$_i$), desdites premières valeurs de courant (Ice$_i$), de ladite résistance équivalente (Req) et desdites secondes valeurs de tension (Vdev$_j$, Vdev$_i$).

4. Procédé selon la revendication 3, dans lequel ladite résistance équivalente (Req) est calculée comme étant la moyenne arithmétique par fenêtre glissante d'une pluralité en cas de résistances instantanées (Req$_i$), chacune est calculée comme le rapport entre une première variation de tension ($\Delta$Vcei) et une première variation de courant correspondante ($\Delta$Ice$_i$), ladite première variation de tension ($\Delta$Vcei) étant une différence entre deux premières valeurs de tension acquises/calculées dans deux étapes d'interrogation consécutives et ladite première variation de courant ($\Delta$Ice$_i$) étant une différence entre deux valeurs de courant obtenues/calculées pendant les deux mêmes étapes d'interrogation.

5. Procédé selon la revendication 3 ou 4, dans lequel l'étape de détermination comprend les étapes de :

- détermination des valeurs estimées de la puissance consommée (PL$_{ji}$) entre deux étapes d'interrogation consécutives (i, i+1) en fonction de l'une desdites premières valeurs de tension (Vce$_i$) et de l'une desdites premières valeurs de courant (Ice$_i$) acquises à la première desdites deux étapes d'interrogation consécutives et en fonction des secondes valeurs de tension (Vdev$_j$) échantillonnées entre les deux étapes d'interrogation consécutives.

6. Procédé selon la revendication 3 ou 4, dans lequel l'étape de détermination comprend les étapes de :

- pour chaque étape d'échantillonnage (j) entre deux étapes d'interrogation consécutives (i, i+1), calcul d'une seconde variation de tension associée ($\Delta$Vdev$_{jj}$) entre l'une desdites secondes valeurs de tension (Vdev$_j$), relative à cette étape d'échantillonnage, et une autre desdites secondes valeurs de tension (Vdev$_i$), échantillonnée à la première des deux étapes d'interrogation consécutives ; et
- pour chaque étape d'échantillonnage (j) entre deux étapes d'interrogation consécutives (i, i+1), calcul d'une valeur estimée associée de la puissance consommée (PLji) en fonction de l'une desdites premières valeurs de tension (Vcei) et de l'une desdites premières valeurs de courant (Icei) obtenues ou calculées à la première desdites deux étapes d'interrogation consécutives et en fonction desdites secondes valeurs de tension ($\Delta$Vdev$_{ji}$)

de ladite résistance équivalente (Req).

**7.** Procédé selon la revendication 6, dans lequel ladite valeur d'estimation de la puissance consommée est calculée selon la formule :

$$PL_{ji} = (Vce_i + \Delta Vdev_{ji}) \cdot (Ice_i + \Delta Idev_{ji}),$$

où $PL_{ji}$ est la valeur estimée de la puissance consommée à l'étape d'échantillonnage générique j, $Vce_i$ est ladite une desdites premières valeurs de tension obtenues/calculées à la première desdites deux étapes d'interrogation consécutives, $\Delta Vdev_{ji}$ est ladite seconde variation de tension, $Ice_i$ est ladite une desdites premières valeurs de courant obtenues/calculées à la première desdites deux étapes d'interrogation consécutives et $\Delta Idev_{ji}$ est une seconde variation de courant calculée comme le rapport entre ladite seconde variation de tension et ladite résistance équivalente.

**8.** Procédé selon l'une quelconque des revendications 2 à 7, comprenant une étape de variation de la période d'interrogation Tq en fonction desdites valeurs d'estimation de la puissance consommée ($PL_{ji}$).

**9.** Procédé selon la revendication 8, dans lequel ladite étape de variation comprend une opération de réduction progressive de ladite période d'interrogation Tq avec l'augmentation desdites valeurs estimées de la puissance consommée ($PL_{ji}$).

**10.** Procédé selon l'une quelconque des revendications 2 à 9, et comprenant les étapes de :

- subdivision de la gamme de puissance pouvant être fournie par le compteur d'énergie électronique (2) en une pluralité de bandes de puissance au moyen d'une pluralité correspondante de valeurs seuils de puissance;
- association aux bandes de puissance de valeurs de périodes d'interrogation respectives, qui diminuent en passant de la bande de puissance la plus basse à la bande de puissance la plus haute ;
- identification de la bande de puissance dans laquelle lesdites valeurs estimées de la puissance consommée ($PL_{ji}$) sont trouvées sur la base d'une comparaison entre lesdites valeurs estimées de la puissance consommée et lesdites valeurs seuils de puissance ; et
- ajustement de la période d'interrogation à la valeur de la période d'interrogation associée à la bande de puissance identifiée.

**11.** Procédé selon l'une quelconque des revendications 2 à 10, comprenant :

- la subdivision de la gamme de puissance pouvant être fournie par ledit compteur d'énergie électronique (2) en une pluralité de bandes de puissance au moyen d'une pluralité de valeurs seuils de puissance correspondante ;
- l'identification de la bande de puissance dans laquelle lesdites valeurs estimées de la puissance consommée ($PL_{ji}$) sont trouvées sur la base d'une comparaison entre lesdites valeurs estimées de la puissance consommée et lesdites valeurs seuils de puissance ; et
- l'association aux temps d'interrogation initiaux des bandes de puissance respectives ($tq0_k$), chacun constitué du temps qui doit s'écouler à partir du moment où les valeurs estimées de la puissance consommée sont entrées dans la bande de puissance associée suite à une augmentation de la puissance avant la réalisation d'une première interrogation dudit compteur électronique (2) dans une telle bande de puissance.

**12.** Procédé selon l'une quelconque des revendications précédentes, dans lequel ledit canal de communication est ledit réseau électrique domestique et dans lequel ledit compteur d'énergie électronique (2) et ledit dispositif communiquent l'un avec l'autre entre eux sur ledit réseau électrique au moyen de courants porteurs en ligne.

**13.** Dispositif (5) pouvant être connecté de manière opérationnelle à un compteur d'énergie électronique pour estimer la puissance électrique consommée par un réseau électrique domestique comprenant ledit compteur d'énergie électronique (2), comprenant une interface de communication (8) pour la communication avec le compteur d'énergie électronique (2) sur un canal de communication et une unité de traitement et de contrôle (11) connectée de manière opérationnelle à l'interface de communication (8), le dispositif (5) étant configuré et programmé pour interroger le compteur d'énergie électronique (2) sur ledit canal de communication afin de recevoir à chaque instant d'interrogation

des informations comprenant au moins un paramètre lié à une mesure de consommation de puissance effectuée par le compteur d'énergie électronique (2) et étant **caractérisé en ce que** l'unité de traitement et de contrôle est configurée pour :

- calculer à bord du dispositif une estimation de ladite mesure de consommation de puissance ou obtenir ladite mesure de consommation de puissance à bord du dispositif ;
- comparer ladite estimation ou ladite mesure de consommation de puissance à au moins une première valeur seuil ;
- augmenter ladite fréquence d'interrogation si ladite estimation ou mesure de la puissance est supérieure ou égale à ladite valeur seuil.

14. Dispositif (5) selon la revendication 13, dans lequel :

- l'unité de traitement et de contrôle (11) est configurée pour calculer une pluralité de valeurs estimées de la puissance consommée entre deux interrogations successives ;
- le dispositif (5) comprend des éléments de connexion au réseau électrique domestique et un circuit de mesure de la tension (18) connecté auxdits éléments de connexion pour mesurer la tension du réseau électrique domestique (1) au point de connexion avec lesdits éléments de connexion électrique (7) et délivrer en sortie une pluralité de valeurs de tension entre deux interrogations successives du compteur d'énergie électronique (2) afin de calculer ladite pluralité de valeurs estimées.

15. Dispositif (5) selon la revendication 13, dans lequel ladite interface de communication (8) est une interface de courants porteurs en ligne.

16. Dispositif (5) selon l'une quelconque des revendications 13 à 15, dans lequel l'unité de traitement et de contrôle (11) est configurée pour exécuter un procédé selon l'une quelconque des revendications 1 à 12.

Fig. 1

Fig. 2

Fig. 3

**EP 3 332 222 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009013762 A
- WO 2011050212 A